# FASCICULE DE BREVET EUROPEEN

(11) **EP 4 457 038 B1**
(45) Date de publication et mention de la délivrance du brevet: **29.10.2025**
(21) Numéro de dépôt: 22798267.5
(22) Date de dépôt: 29.09.2022
(51) Int. Cl.: B07C 1/02, B25J 9/00, B25J 9/16, B25J 15/00, B25J 15/06, B25J 19/02

(54) **PROCÉDÉ D'ALIMENTATION EN COLIS D'UN CONVOYEUR DE TRI À L'AIDE D'UN ROBOT PRÉHENSEUR À VENTOUSES ET À CAMÉRA INTÉGRÉE**
VERFAHREN ZUM FÖRDERN VON PAKETEN ZU EINEM SORTIERFÖRDERER MITTELS EINES GREIFROBOTERS MIT SAUGKÖPFEN UND INTEGRIERTER KAMERA
METHOD OF FEEDING PARCELS TO A SORTING CONVEYOR WITH A SUCTION CUP GRIPPING ROBOT WITH INTEGRATED CAMERA

(30) Priorité: 28.12.2021 FR 2114578
(43) Date de publication de la demande: 06.11.2024
(73) Titulaire: Solystic, 92227 Bagneux (FR)
(72) Inventeur: BLACHE, Richard, 07610 LEMPS (FR); BRISSON, Thierry, 26600 MERCUROL VEAUNES (FR); DEVISE, Fabien, 26000 VALENCE (FR); ROUX, Jean-Marc, 26300 CHATEAUNEUF-SUR-ISERE (FR)
(74) Mandataire: IP Trust
(86) Numéro de dépôt international: PCT/EP2022/077159
(87) Numéro de publication internationale: WO 2023/126085

(56) Documents cités:
- EP-A1- 3 041 615
- US-A1- 2013 096 713

## Description

### Domaine technique

L'invention concerne le domaine du tri de colis et plus particulièrement un procédé d'alimentation en colis d'un convoyeur de tri à partir d'un vrac de colis convoyés sur un convoyeur d'alimentation dans lequel, on forme une image numérique du vrac de colis à l'aide d'une première caméra disposée au dessus du convoyeur d'alimentation, on identifie à l'aide d'une unité de contrôle-commande un colis à individualiser présentant une face de préhension sur le dessus du colis non recouverte par un autre colis dans ladite image numérique du vrac de colis, ladite unité de contrôle-commande étant paramétrée pour piloter en retour un robot préhenseur à ventouses comportant une main de préhension avec une paume à partir de laquelle s'étendent lesdites ventouses de manière à saisir par aspiration ledit colis à individualiser identifié dans l'image numérique et à le déposer sur le convoyeur de tri.

### Technique antérieure

Les plateformes logistiques utilisent aujourd'hui des installations de tri de colis conçues pour alimenter en colis des convoyeurs de tri de manière automatisée, telle que l'installation décrite dans le brevet EP3041615.

Ce type d'installation comprend généralement une caméra placée au dessus d'un convoyeur d'alimentation apte à former une image numérique du vrac de colis.

Ce type d'installation comprend également un robot préhenseur à ventouses comportant une main de préhension avec une paume à partir de laquelle s'érigent les ventouses qui sous la commande d'une unité de contrôle-commande est apte à saisir un colis à individualiser parmi le vrac de colis et à le déplacer sur le convoyeur de tri.

Lorsque le robot préhenseur déplace le colis à individualiser sur le convoyeur de tri, il est fréquent que la face du dessus de colis, qui est également la face de préhension par laquelle le colis est saisi par le robot préhenseur, ne présente pas d'indication de tri.

L'indication de tri est généralement apposée sur une seule des faces du colis et il est essentiel qu'elle soit visible sur la face du dessus du colis pour permettre sa détection lors de son convoyage sur le convoyeur de tri.

Ainsi, dans le cas où l'indication de tri ne serait pas visible sur la face du dessus du colis, le colis est retourné manuellement afin de présenter l'indication de tri vers le haut. Cette tâche répétitive et peu ergonomique ralentit fortement la cadence de tri.

### Exposé de l'invention

La présente invention a pour objet un procédé automatisé d'alimentation en colis d'un convoyeur de tri contribuant à résoudre les problèmes mentionnés ci-dessus.

A cet effet, l'invention porte sur un procédé d'alimentation en colis d'un convoyeur de tri à partir d'un vrac de colis convoyés sur un convoyeur d'alimentation dans lequel, on forme une image numérique du vrac de colis à l'aide d'une première caméra disposée au dessus du convoyeur d'alimentation, on identifie à l'aide d'une unité de contrôle-commande un colis à individualiser présentant une face de préhension sur le dessus du colis non recouverte par un autre colis dans ladite image numérique du vrac de colis, ladite unité de contrôle-commande étant paramétrée pour piloter en retour un robot préhenseur à ventouses comportant une main de préhension avec une paume à partir de laquelle s'étendent lesdites ventouses de manière à saisir par aspiration ledit colis à individualiser identifié dans l'image numérique et à le déposer sur le convoyeur de tri, caractérisé en ce que lorsque ledit robot préhenseur se trouve au dessus dudit colis à individualiser et avant de le saisir, on forme une image numérique de la face de préhension dudit colis à individualiser à l'aide d'une seconde caméra agencée dans la paume de la main entre les ventouses dudit robot préhenseur, et en ce que l'unité de contrôle-commande est paramétrée pour identifier la présence ou l'absence d'un indice de présence d'une indication de tri dans ladite image numérique de la face de préhension du colis et pour piloter en retour le robot préhenseur afin de déplacer respectivement le colis depuis le convoyeur d'alimentation directement sur le convoyeur de tri ou pour déposer le colis depuis le convoyeur d'alimentation sur un dispositif de retournement de colis conçu pour retourner et déposer le colis sur le convoyeur de tri.

Le procédé selon l'invention peut présenter les caractéristiques suivantes :
- on éclaire brièvement le vrac de colis lorsque l'image numérique du colis à individualiser est formée par la seconde caméra à l'aide d'un système d'éclairage pulsé commandé par l'unité de contrôle-commande et agencé dans la paume de la main entre les ventouses et autour de la caméra dudit robot préhenseur ;
- l'identification de l'indice de présence d'une indication de tri est déduite par l'unité de contrôle-commande à partir de la détection directe d'une adresse de destination ou de la détection d'un indice graphique indiquant la présence d'une adresse de destination sur ladite face de préhension, tel qu'un logo commercial.

L'idée à la base de l'invention est de détecter sur la face de préhension du colis à individualiser, la présence ou l'absence d'un indice d'une indication de tri, et ce avant que le colis ne soit injecté sur le convoyeur de tri, de manière à retourner automatiquement le colis lors de sa dépose sur le convoyeur de tri et ainsi faciliter le traitement du colis dans le processus de tri.

L'idée consiste également effectuer cette détection lors du déplacement du robot préhenseur pour la saisi du colis à individualiser et plus particulièrement lorsque la première caméra est à l'aplomb et au plus près du colis à individualiser.

Cela permet d'avoir une image numérique de meilleur qualité qui facilite la détection d'un indice de présence d'indication de tri, généralement non visible avec la première caméra située au dessus du vrac de colis.

Le but de l'invention est également d'améliorer la rapidité et l'efficacité de tri des colis tout en réduisant au maximum les tâches manuelles peu ergonomiques et répétitives telles que le retournement des colis et leur déplacement d'un convoyeur à un autre.

### Brève description des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la [Fig.1] est une représentation schématique d'une installation de tri pour réaliser le procédé de l'invention ;
- la [Fig.2] est une représentation schématique vue de coté d'une partie d'un robot préhenseur à ventouses avec une caméra intégrée au robot préhenseur pour réaliser le procédé de l'invention. ;
- la [Fig.3] est un diagramme illustrant le procédé selon l'invention.

### Description détaillée de l'invention

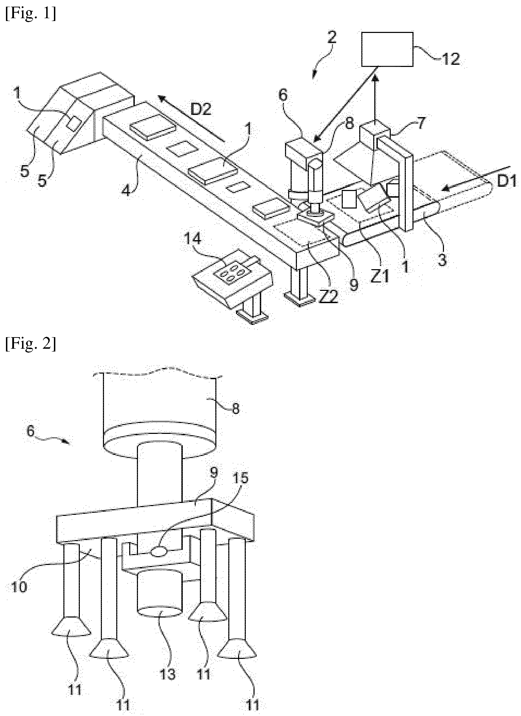

Le procédé de tri de colis 1 selon l'invention fait référence à une installation de tri 2 telle qu'illustrée sur la [Fig.1], comprenant un convoyeur d'alimentation 3 conçu pour déplacer les colis 1 en vrac selon un première direction de convoyage D1, un convoyeur de tri 4 conçu pour convoyer les colis 1 selon une seconde direction de convoyage D2 vers des sorties de tri 5 appropriées et un robot préhenseur 6 conçu pour déplacer un par un les colis 1 du vrac de colis 1 du convoyeur d'alimentation 3 sur le convoyeur de tri 4.

Par colis 1, on entend tout type d'objet habituellement trié dans les centres de tri postaux ou plateformes logistiques, tels que les Petits Paquets Imports également appelés PPI.

Comme représenté sur la [Fig.1], une caméra 7 est disposée au dessus du convoyeur d'alimentation 3, et dans le cas présent, à une extrémité aval du convoyeur d'alimentation 3 par rapport à la première direction de convoyage D1.

La caméra 7 a ici un champ de vision lui permettant de former une image numérique du vrac de colis 1 correspondant à une zone de préhension Z1 dans laquelle les colis 1 peuvent être saisis par le robot préhenseur 6.

Le robot préhenseur 6, représenté sur la [Fig.2], comprend notamment un bras 8 mobile à l'extrémité duquel est monté une main 9 de préhension avec une paume 10 à partir de laquelle s'étendent des ventouses 11.

Le robot préhenseur 6 est spécialement conçu pour saisir les colis 1 par aspiration par création du vide dans les ventouses 11.

Une fois le colis 1 aspiré par les ventouses 11, la main 9 est déplacé par le bras 8 pour être positionnée au dessus du convoyeur de tri 4.

Les colis 1 sont ensuite déposés sur une zone de dépose Z2 par simple arrêt de l'aspiration, ici à une extrémité amont du convoyeur de tri 4. Chaque colis 1 du vrac de colis 1 du convoyeur d'alimentation 3 est ainsi injecté sur le convoyeur de tri 4 en série.

L'installation de tri 2 comprend également une unité de contrôle-commande 12 paramétrée pour identifier, dans l'image numérique du vrac de colis 1, un colis 1 à individualiser présentant une face de préhension sur le dessus du colis 1 non recouverte par un autre colis 1.

En réponse à cette identification, l'unité de contrôle-commande 12 pilote le robot préhenseur 6 pour saisir et déplacer un colis 1 sur le convoyeur de tri 4, et plus particulièrement pour commander son déplacement entre la zone de préhension Z1 et la zone de dépose Z2 et l'aspiration dans les ventouses 11.

Le robot préhenseur 6 est également muni d'une seconde caméra 13 agencée dans la paume 10 de la main 9 du robot préhenseur 6 entre les ventouses 11 conçue pour former une image numérique de la face de préhension du colis 1 à individualiser avant que celui-ci ne soit saisi par les ventouses 11.

L'unité de contrôle-commande 12 est également paramétrée pour identifier la présence ou l'absence d'un indice de présence d'une indication de tri dans l'image numérique de la face de préhension du colis 1 et pour piloter en retour le robot préhenseur 6.

L'identification de l'indice de présence d'une indication de tri est ici déduite par l'unité de contrôle-commande 12 à partir de la détection directe d'une adresse de destination ou de la détection d'un indice graphique indiquant la présence d'une adresse de destination sur ladite face de préhension, tel qu'un logo commercial.

Par adresse de destination on entend également adresse de distribution ou adresse postale.

Cette identification de l'indice d'indication de tri est réalisée lorsque le robot préhenseur 6 se trouve au dessus du colis 1 à individualiser en vis-à-vis de sa face de préhension.

Ainsi, en présence de l'indication de tri l'unité de contrôle-commande 12 est paramétrée pour piloter le robot préhenseur 6 pour déplacer le colis 1 à individualiser directement sur le convoyeur de tri 4 et en l'absence de l'indication de tri pour déposer le colis 1 depuis le convoyeur d'alimentation 3 sur un dispositif de retournement 14 de colis 1 lui même conçu pour retourner et déposer le colis 1 sur le convoyeur de tri 4.

Le robot préhenseur 6 est également équipé d'un système d'éclairage 15 pulsé commandé par l'unité de contrôle-commande 12 conçu pour éclairer brièvement le vrac de colis 1 lorsque l'image numérique du colis 1 à individualiser est formée par la seconde caméra 13. Le système d'éclairage 15 est avantageusement agencé dans la paume 10 de la main 9 entre les ventouses 11 et autour de la seconde caméra 13 de manière à ne pas altérer le champ de vision de la seconde caméra 13 ni la capacité de préhension des ventouses 11.

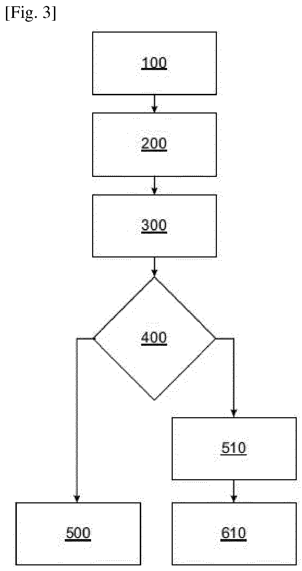

Les étapes du procédé selon l'invention sont résumées dans le diagramme de la [Fig.3] dans lequel à l'étape 100 l'image numérique du vrac de colis 1 est formée par la première caméra 7 ; à l'étape 200, l'unité de contrôle-commande déduit un colis à individualiser à partir de l'image du vrac de colis 1 et commande en retour le robot préhenseur 6 pour le positionner en vis-à-vis de la face de préhension du colis 1 ; à l'étape 300, l'image numérique du colis 1 à individualiser est formée par la seconde caméra 13 ; à l'étape 400, l'unité de contrôle-commande 12 en déduit la présence ou non d'un indice de présence d'une indication de tri ; à l'étape 500, en présence d'un indice de présence d'une indication de tri l'unité de contrôle-commande 12 commande le robot préhenseur 6 pour déplacer le colis 1 à individualiser directement sur le convoyeur de tri 4 ; à l'étape 510, en l'absence d'un indice de présence d'une indication de tri l'unité de contrôle-commande 12 commande le robot préhenseur 6 pour déplacer le colis 1 à individualiser sur un dispositif de retournement 14 : à l'étape 610, le dispositif de retournement 14 retourne le colis 1 de 180° directement sur le convoyeur de tri 4.

Un tel procédé de tri de colis selon l'invention mis en œuvre dans une installation de tri 1 décrite ci-dessus permettra d'améliorer la capacité de tri en optimisant les chances d'avoir la face de préhension du colis 1 à individualiser avec un indice de présence d'indication de tri. La détection de l'indice de présence d'une indication de tri sur le colis à individualiser pendant le déplacement du robot préhenseur 6 et juste avant la préhension du colis 1, permet ainsi de réduire le temps du processus de tri et de réduire l'encombrement de l'installation au sol en supprimant les accès à la machine pour les opérateurs pour ce type d'opération.

Il va de soi que la présente invention ne saurait être limitée au mode de réalisation exposé plus haut, susceptible de subir des modifications, sans pour autant sortir du cadre de l'invention.

## Revendications

1. Procédé d'alimentation en colis (1) d'un convoyeur de tri (4) à partir d'un vrac de colis convoyés sur un convoyeur d'alimentation (3) dans lequel, on forme une image numérique du vrac de colis à l'aide d'une première caméra (7) disposée au dessus du convoyeur d'alimentation, on identifie à l'aide d'une unité de contrôle-commande (12) un colis à individualiser présentant une face de préhension sur le dessus du colis non recouverte par un autre colis dans ladite image numérique du vrac de colis, ladite unité de contrôle-commande étant paramétrée pour piloter en retour un robot préhenseur (6) à ventouses (11) comportant une main (9) de préhension avec une paume (10) à partir de laquelle s'étendent lesdites ventouses de manière à saisir par aspiration ledit colis à individualiser identifié dans l'image numérique et à le déposer sur le convoyeur de tri, **caractérisé en ce que** lorsque ledit robot préhenseur se trouve au dessus dudit colis à individualiser et avant de le saisir, on forme une image numérique de la face de préhension dudit colis à individualiser à l'aide d'une seconde caméra (13) agencée dans la paume de la main entre les ventouses dudit robot préhenseur, et **en ce que** l'unité de contrôle-commande est paramétrée pour identifier la présence ou l'absence d'un indice de présence d'une indication de tri dans ladite image numérique de la face de préhension du colis et pour piloter en retour le robot préhenseur afin de déplacer respectivement le colis depuis le convoyeur d'alimentation directement sur le convoyeur de tri ou pour déposer le colis depuis le convoyeur d'alimentation sur un dispositif de retournement de colis conçu pour retourner et déposer le colis sur le convoyeur de tri.

2. Procédé d'alimentation en colis selon la revendication 1, dans lequel on éclaire brièvement le vrac de colis lorsque l'image numérique du colis à individualiser est formée par la seconde caméra à l'aide d'un système d'éclairage (15) pulsé commandé par l'unité de contrôle-commande et agencé dans la paume de la main entre les ventouses et autour de la caméra dudit robot préhenseur.

3. Procédé d'alimentation de colis selon la revendication 1 ou 2, dans lequel l'identification de l'indice de présence d'une indication de tri est déduite par l'unité de contrôle-commande à partir de la détection directe d'une adresse de destination ou de la détection d'un indice graphique indiquant la présence d'une adresse de destination sur ladite face de préhension, tel qu'un logo commercial.

## Patentansprüche

1. Verfahren zum Zuführen von Paketen (1) zu einem Sortierförderer (4) aus einer auf einem Zuführförderer (3) beförderten Paketmenge, wobei ein digitales Bild der Paketmenge mit einer ersten Kamera (7) gebildet wird, die über dem Zuführförderer angeordnet ist, mit Hilfe einer Steuer- und Regeleinheit (12) ein zu individualisierendes Paket identifiziert wird, das in dem digitalen Bild der Paketmenge eine Greiffläche auf der Oberseite des Pakets aufweist, die nicht von einem anderen Paket bedeckt ist, wobei die Steuer- und Regeleinheit dazu parametriert ist, um einen Greiferroboter (6) mit Saugnäpfen (11), der eine Greifhand (9) mit einer Handfläche (10) umfasst, von der sich die Saugnäpfe erstrecken, so zurückzusteuern, dass er das im digitalen Bild identifizierte, zu individualisierende Paket durch Ansaugen ergreift und es auf dem Sortierförderer ablegt, **dadurch gekennzeichnet, dass**, wenn sich der Greiferroboter über dem zu individualisierenden Paket befindet und bevor er es ergreift, ein digitales Bild der Greiffläche des zu individualisierenden Pakets mit Hilfe einer zweiten Kamera (13) gebildet wird, die in der Handfläche zwischen den Saugnäpfen des Greiferroboters angeordnet ist, und dass die Steuer- und Regeleinheit dazu parametriert ist, das Vorhandensein oder Fehlen eines Anwesenheitshinweises einer Sortieranzeige in dem digitalen Bild der Greiffläche des Pakets zu erkennen und den Greiferroboter so zurückzusteuern, dass er das Paket entweder direkt vom Zuführförderer auf den Sortierförderer bewegt oder das Paket vom Zuführförderer auf eine Vorrichtung zum Wenden von Paketen ablegt, die dazu ausgelegt ist, das Paket zu wenden und auf den Sortierförderer abzulegen.

2. Verfahren zum Zuführen von Paketen nach Anspruch 1, wobei die Paketmenge kurz beleuchtet wird, wenn das digitale Bild des zu individualisierenden Pakets von der zweiten Kamera mithilfe eines gepulsten Beleuchtungssystems (15) gebildet wird, das von der Steuer- und Regeleinheit gesteuert wird und in der Handfläche zwischen den Saugnäpfen und um die Kamera des Greiferroboters angeordnet ist.

3. Verfahren zum Zuführen von Paketen nach Anspruch 1 oder 2, wobei die Identifizierung des Hinweises auf das Vorliegen einer Sortieranweisung von der Steuer- und Regeleinheit auf der Grundlage der direkten Erkennung einer Zieladresse oder der Erkennung eines grafischen Hinweises, der das Vorliegen einer Zieladresse auf der genannten Greiffläche anzeigt, wie beispielsweise ein Firmenlogo, abgeleitet wird.

## Claims

1. Method for feeding packages (1) of a sorting conveyor (4) from a bulk of packages conveyed on a feed conveyor (3), wherein a digital image of the bulk of packages is formed using a first camera (7) disposed above the feed conveyor, using a control-command unit (12), a package to be individualised is identified having a gripping face on the top of the package not covered by another package in said digital image of the bulk of packages, said control-command unit being configured to control in return a gripping robot (6) with suction cups (11) comprising a gripping hand (9) with a palm (10) from which said suction cups extend so as to grasp by suction said package to be individualised identified in the digital image and to deposit it on the sorting conveyor, **characterised in that**, when said gripping robot is above said package to be individualised and before gripping it, a digital image of the gripping face of said package to be individualised is formed using a second camera (13) arranged in the palm of the hand between the suction cups of said gripping robot, and **in that** the control-command unit is configured to identify the presence or absence of an index of presence of a sorting indication in said digital image of the gripping face of the package and to control in return the gripping robot in order to respectively move the package from the supply conveyor directly onto the sorting conveyor or to deposit the package from the feed conveyor onto a package-turnover device designed to turn over and deposit the package on the sorting conveyor.

2. Method for feeding packages according to claim 1, wherein the bulk of packages is briefly illuminated when the digital image of the package to be individualised is formed by the second camera using a pulsed illumination system (15) controlled by the control-command unit and arranged in the palm of the hand between the suction cups and around the camera of said gripping robot.

3. Method for feeding packages according to claim 1 or 2, wherein the identification of the index of presence of a sorting indication is deduced by the control-command unit from the direct detection of a destination address or the detection of a graphic index indicating the presence of a destination address on said gripping face, such as a commercial logo.
